# FASCICULE DE BREVET EUROPEEN

(11) **EP 2 878 720 B1**
(45) Date de publication et mention de la délivrance du brevet: **16.08.2017**
(21) Numéro de dépôt: 14187339.8
(22) Date de dépôt: 01.10.2014
(51) Int. Cl.: D03D 1/00, B60N 2/58, D03D 3/00, D03D 13/00, D03D 15/00

(54) **Coiffe pour siège de véhicule automobile**
Überzug für Kraftfahrzeugsitz
Lining for a motor vehicle seat

(30) Priorité: 02.12.2013 FR 1361937
(43) Date de publication de la demande: 03.06.2015
(73) Titulaire: FAURECIA Sièges d'Automobile, 92000 Nanterre (FR)
(72) Inventeur: Koubaka, Janick, 91690 Saclas (FR); Rafstedt, Pauline, 91630 Leudeville (FR); Lemarchand, Robert, 94500 Champigny sur Marne (FR)
(74) Mandataire: Thibon, Laurent

(56) Documents cités:
- EP-A1- 0 477 521
- US-A1- 2011 305 864

## Description

La présente description concerne de façon générale les sièges pour véhicule automobile et, plus particulièrement, la réalisation d'une coiffe pour de tels sièges incorporant une bande décorative ou un ruban décoratif.

Il est de plus en plus fréquent de réaliser des coiffes pour sièges de véhicule automobile avec des zones de matières différentes les unes des autres, telles que, par exemple, en cuir, en simili, en tissu, etc. On cherche également à obtenir un effet esthétique à l'aide de bandes décoratives de couleur et/ou de matière différente de celle du reste de la coiffe.

Aujourd'hui, de telles bandes décoratives sont généralement découpées dans des matériaux usuels employés pour la réalisation de coiffes pour sièges de véhicule automobiles.

Alternativement, des rubans décoratifs ou des bandes décoratives, notamment tissées sur un métier étroit, peuvent être utilisés et sont généralement collé(e)s sur un support afin d'être assemblé(e)s à la coiffe. Toutefois, de tels rubans décoratifs ou de telles bandes décoratives sont souvent renforcés ou présentent des textures particulières les rendant incompatibles avec des coiffes, notamment tissées, et, plus particulièrement, avec un assemblage par couture au reste de la coiffe. En effet, la couture d'un tel ruban décoratif ou d'une telle bande décorative avec le reste de la coiffe crée des déformations et/ou ondulations au niveau de la couture.

Le document US-A-2012/037263 décrit la réalisation d'une feuille textile enroulable.

Le document EP-A-0 477 521 décrit un procédé de réalisation d'un tissu pour airbag.

Le document DE-A-40 09 455 décrit un procédé de tissage d'une bande.

Le document US-A-2011/0191937 décrit une casquette équipée d'un bandeau.

Le document US-A-2011/0305864 décrit un élément de fixation.

Il serait souhaitable, notamment pour améliorer les possibilités de choix lors de la fabrication des coiffes, en particulier pour réaliser de petites séries, de pouvoir inclure dans une coiffe d'une matière donnée, un ou plusieurs rubans ou bandes tissé(e)s.

Un mode de réalisation vise un ruban ou une bande tissé(e), en particulier étroit(e), notamment réalisé (e) sur un métier étroit, destiné(e) à une coiffe de siège, notamment pour véhicule automobile, qui pallie tout ou partie des inconvénients des bandes décorative connues.

Un autre mode de réalisation vise un ruban ou une bande tissé(e), en particulier étroit(e), notamment réalisé(e) sur un métier étroit, compatible avec un assemblage par couture d'assemblage avec au moins une autre pièce de la coiffe du siège.

Un autre mode de réalisation vise une coiffe pour siège, notamment de véhicule automobile, intégrant une ou plusieurs bandes cousues à une pièce de la coiffe.

Un autre mode de réalisation vise une solution compatible avec une coiffe avec ou sans couture apparente.

Ainsi, un mode de réalisation prévoit une coiffe pour siège de véhicule automobile comportant au moins une pièce de coiffe assemblé à au moins un bande dont au moins une première portion a un tissage ayant une première densité et au moins un secteur à un tissage d'une seconde densité plus faible que la première densité, la couture d'assemblage entre la bande et la pièce de coiffe étant disposée au niveau du secteur ayant la seconde densité.

Le fait de prévoir un secteur ayant une seconde densité de tissage plus faible permet de coudre une zone de couture à une pièce de coiffe sans ondulation.

Selon un mode de réalisation, la bande comporte deux secteurs de faible densité divisant la bande en une portion centrale et deux portions latérales.

Selon un mode de réalisation, le secteur ayant la seconde densité présente un nombre de fils par unité de surface inférieur au nombre de fils par unité de surface de la portion ayant la première densité.

Une telle réduction du nombre de fils par unité de surface dans le secteur ayant la seconde densité est un moyen particulièrement simple de diminuer la densité. Il suffit, dans le métier à tisser de fabrication de la bande, de supprimer quelques fils au niveau des régions souhaitées.

Selon un autre mode de réalisation, le secteur ayant la seconde densité présente des fils d'un diamètre inférieur au diamètre des fils de la portion ayant la première densité.

Selon un mode de réalisation, la différence entre la première densité et la seconde densité représente un pourcentage compris entre 8 et 30 %, de préférence compris entre 15 et 25 %, avantageusement de 17 %.

De telles valeurs sont compatibles avec une préservation de la structure de la bande, c'est-à-dire sans trop risquer de l'affaiblir.

Selon un mode de réalisation, la portion ayant la première densité a un nombre de fils de chaîne supérieur à 30 fils par centimètre et, de préférence supérieur à 50 fils par centimètre.

Selon un mode de réalisation, la portion ayant la première densité a un nombre de fils de chaîne compris entre 40 fils par centimètre et 70 fils par centimètre.

Selon un mode de réalisation, le nombre de fils de chaîne dans le secteur ayant la seconde densité est inférieur de 10 à 25 %, préférentiellement de 10 % à 20 %, au nombre de fils de chaîne dans la portion ayant la première densité.

Selon un mode de réalisation, la portion ayant la première densité a un nombre de fils de trame compris entre 20 fils par centimètre et 50 fils par centimètre.

On peut alors réaliser, en particulier en petite séries, des coiffes d'aspect différents, basées sur de mêmes pièces de coiffe et ne différant que par la ou les bande (s) qui y sont assemblée(s).

Selon un mode de réalisation, une couture d'assemblage entre la bande et la pièce de coiffe est disposée au niveau du secteur ayant la seconde densité.

Selon un mode de réalisation, la coiffe comporte en outre au moins une couture supplémentaire, notamment parallèle à la liaison entre la bande et la pièce de coiffe, cette couture supplémentaire étant réalisée uniquement dans la pièce de coiffe.

La couture supplémentaire n'a qu'une fonction esthétique et n'est pas disposée sur la bande. Ainsi, il n'y a pas de risque de déformation de la bande.

Un mode de réalisation prévoit également un siège pour véhicule automobile comportant une telle coiffe.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
la figure 1 est une représentation schématique d'une coiffe pour un siège de véhicule automobile ;
la figure 2 est une vue de dessus d'un mode de réalisation d'un ruban ;
la figure 2A est une vue schématique en coupe selon la ligne A du ruban de la figure 2 ;
la figure 3 est une vue schématique en coupe d'un mode d'assemblage d'un ruban illustré aux figures 2 et 2A dans une coiffe ;
la figure 4 est une vue schématique de dessus de la coiffe de la figure 3 ;
la figure 5A est une vue schématique en coupe schématique d'un autre mode d'assemblage du ruban illustré aux figures 2 et 2A dans une coiffe ;
La figure 5B est une vue schématique en coupe d'un autre mode d'assemblage du ruban illustré aux figures 2 et 2A dans une coiffe ; et
la figure 6 est une perspective schématique de dessus de la coiffe de la figure 5A.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par ailleurs, les mêmes éléments ont été représentés sur les différentes figures et ont été tracés sans respect d'échelle.

Par souci de clarté, seuls les éléments utiles à la compréhension des modes de réalisation qui vont être décrits ont été représentés et seront détaillés. En particulier, le procédé de réalisation d'un élément tissé pour constituer, que ce soit une coiffe, un ruban ou une bande à intégrer à celle-ci, n'a pas été détaillé, les modes de réalisation décrits étant compatibles avec les outils habituellement utilisés pour la fabrication de telles pièces.

De plus, l'assemblage d'une coiffe sur un siège, notamment de véhicule automobile, n'a pas non plus été détaillé, les modes de réalisation décrits étant là encore compatibles avec les techniques usuelles.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, il est fait référence à l'orientation des figures. Sauf précision contraire, les expressions approximativement, sensiblement et, de l'ordre de, signifient à 10 % près.

Les divers modes de réalisation présentés portent, notamment, sur un ruban ou une bande. Toutefois, ces deux appellations couvrent le même objet. Dans la présente description, sauf mention contraire, il sera donc indifféremment fait référence à un ruban ou à une bande pour définir le même élément.

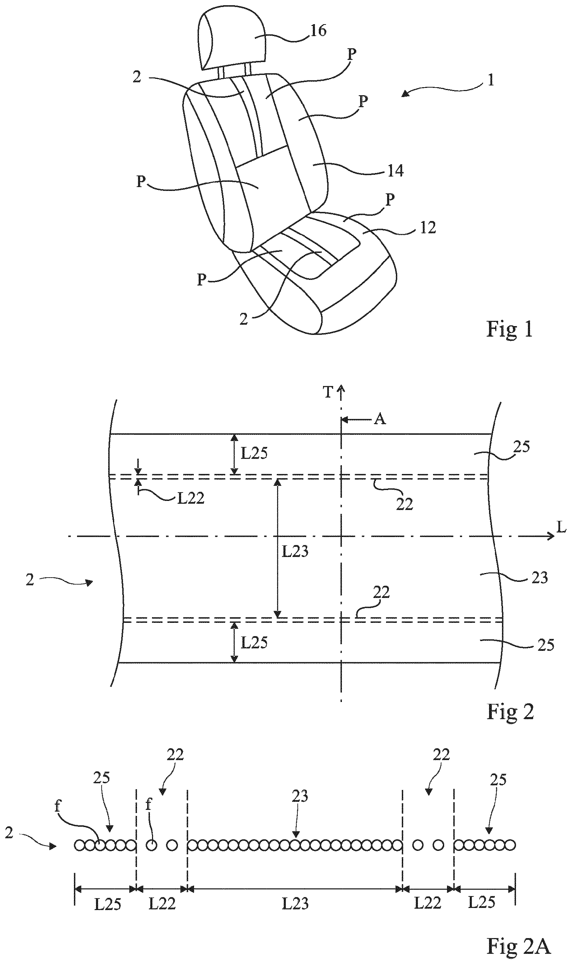

La figure 1 est une représentation schématique d'une coiffe 1 pour un siège de véhicule automobile. La coiffe 1 se compose généralement d'une partie d'assise 12 et ou d'une partie de dossier 14 et, optionnellement, d'une partie d'appui-tête 16 et/ou d'un accoudoir. La coiffe 1 est constituée d'au moins une pièce de coiffe P, avantageusement plusieurs pièces de coiffe P, notamment en tissu, en cuir, en matière synthétique, etc. Dans les réalisations visées par la présente description, la pièce de coiffe P est assemblée avec au moins une bande 2, ou ruban 2. Un tel assemblage permet notamment de donner un rendu esthétique et/ou fonctionnel différent, que ce soit par la nature de la bande 2 ou par sa couleur.

Alternativement, plusieurs pièces de coiffe P sont susceptibles d'être assemblées par l'intermédiaire d'au moins une bande 2.

Dans les modes de réalisation décrits ci-dessous, la bande 2 est une bande tissée, préférentiellement étroite obtenue, par exemple à partir d'un métier étroit, adaptée à être assemblée, par couture, aux pièces de coiffe P de la coiffe 1 qu'elle jouxte.

Les figures 2 et 2A sont respectivement des vues de dessus et en coupe selon la ligne A de la figure 2, d'un mode de réalisation d'une bande 2, ou ruban 2, destiné à être cousu à des pièces de coiffe P de la coiffe 1, par exemple du type illustré en figure 1.

La bande 2 est tissée et s'étend selon une direction longitudinale L. La bande 2 comporte, préférentiellement selon la direction longitudinale L, au moins un secteur 22, avantageusement une ligne 22, présentant un tissage d'une seconde densité plus faible qu'une première densité de tissage d'au moins une autre région de la bande 2. Selon un mode particulier de réalisation présenté à la figure 2, la bande 2 comporte deux lignes 22, avantageusement parallèles, s'étendant longitudinalement.

Ainsi disposé, le secteur 22 divise donc, selon une direction transversale T, perpendiculaire à la direction longitudinale L, la bande 2 en une portion centrale 23 et au moins une portion latérale 25.

Dans une configuration comportant deux lignes 22, la bande 2 est divisée, selon la direction transversale T, par les deux lignes 22 en une portion centrale 23 et deux portions latérales 25.

Le secteur 22 de seconde densité de la bande 2 présente une largeur L22, par exemple comprise entre 1 mm et 3 mm, de préférence de l'ordre du millimètre.

Par ailleurs, la portion latérale 25 de la bande 2 présente une largeur L25. Préférentiellement, la portion latérale 25 est destinée à être masquée après assemblage de la bande 2 avec la pièce de coiffe P adjacente. La largeur L25 est par exemple comprise entre 5 mm et 20 mm, de préférence de l'ordre de la dizaine de millimètres.

De plus, la portion centrale 23 de la bande 2 présente une largeur L23, par exemple comprise entre 1 cm et 20 cm, de préférence entre 5 cm et 20 cm, en particulier de une ou deux dizaines de centimètres.

A titre d'exemple particulier de réalisation, la portion centrale 23 et la portion latérale 25 de la bande 2 présentent la même densité de tissage. Alternativement, la portion centrale 23 de la bande 2 présente une densité de tissage différente de la densité de tissage de la portion latérale 25 de la bande 2. Toutefois, selon les diverses alternatives, la seconde densité de tissage du secteur 22 est inférieure à la densité de tissage de la portion centrale 23 de la bande 2 et a la densité de tissage de la portion latérale 25 de la bande 2.

Le secteur 22 est destiné à constituer une zone de couture de la bande 2 avec la pièce de coiffe P adjacente.

En prévoyant une seconde densité inférieure au niveau du secteur 22, on évite le problème des ondulations lors de la couture qui se produirait autrement avec un tissu présentant tissage homogène.

La figure 2A illustre, de façon schématique et sans respect d'échelle, un exemple de tissage selon des densités différentes. Selon l'exemple présenté à la figure 2A, le secteur 22 présente une seconde densité de fil f inférieur à une densité de fil f de la portion centrale 23 de la bande 2 et/ou de la densité de tissage de la portion latérale 25 de la bande 2.

Une telle diminution de seconde densité de fil f est obtenue pour les fils f, avantageusement parallèles, s'étendant selon la direction longitudinale L de la bande 2 afin de préserver la structure de la bande 2.

Selon une variante de réalisation, le secteur 22 est obtenu par une diminution du diamètre des fils f au niveau du secteur 22 plutôt que par une diminution du nombre de fils f. Par exemple, en considérant un tissu composé de fils f de 660 décitex, on pourra réaliser le secteur 22 avec des fils f de 330 décitex ou encore de 167 décitex.

Une bande 2, telle que décrite ci-dessus, est compatible avec plusieurs types d'assemblage avec la coiffe 1.

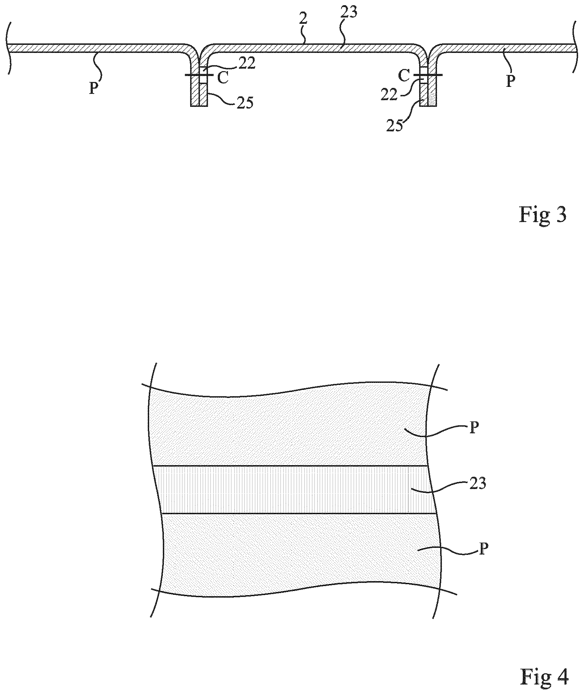

Les figures 3 et 4 sont respectivement des vues schématique en coupe et de dessus, d'un mode de réalisation, dit sans couture apparente.

Selon ce mode particulier de réalisation, deux pièces de coiffe P sont réunies à l'aide d'une bande 2 par une couture d'assemblage C. La couture d'assemblage C relie des bords de la bande 2 à des bords des pièces de coiffe P. La couture d'assemblage C s'effectue au niveau du secteur 22.

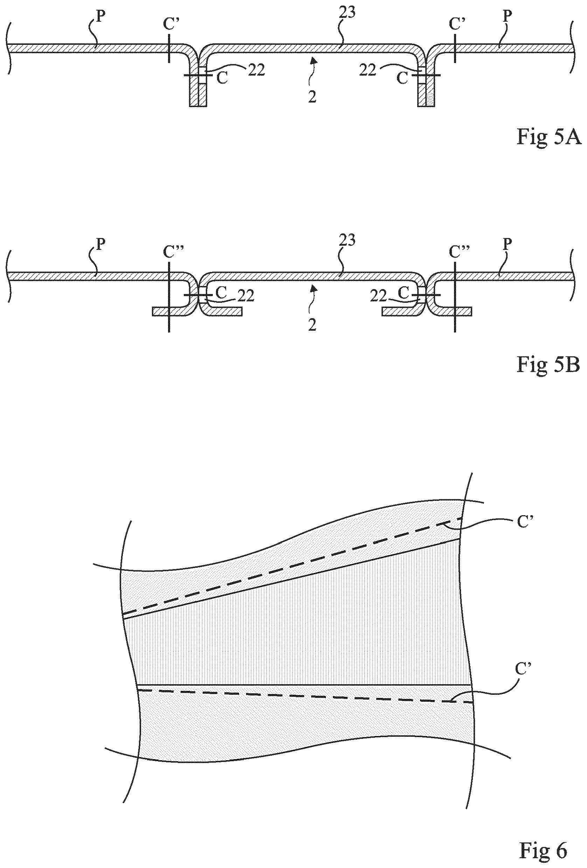

Les figures 5A et 6 sont respectivement des vues schématique en coupe et en perspective de dessus d'un autre mode de réalisation, dit à couture apparente. Un tel mode de réalisation est, par exemple, destiné à répondre à des exigences esthétiques, pour lesquelles on souhaite rendre la couture visible de part et d'autre de la bande.

Selon cet autre mode particulier de réalisation, deux pièces de coiffe P sont réunies à l'aide d'une bande 2 par une couture C, tel que décrit en relation avec les figures 3 et 4. Toutefois, une couture supplémentaire C' est réalisée au voisinage du bord de chaque pièce de coiffe P. La couture supplémentaire C' est une couture fictive, en ce sens qu'elle n'a pas de fonction d'assemblage. Elle ne prend que les bords des pièces de coiffe P et n'inclut pas les bords de la bande 2. Ainsi, on évite le risque de déformation de la bande 2 lors de l'assemblage de celle-ci avec la pièce de coiffe P.

Selon encore un autre mode particulier de réalisation présenté à la figure 5B, deux pièces de coiffe P sont réunies à l'aide d'une bande 2 par une couture d'assemblage C, tel que décrit en relation avec les figures 3 et 4. De plus, une couture supplémentaire C" est réalisée au voisinage du bord de chaque pièce de coiffe P.

La couture supplémentaire C" permet d'assurer un assemblage d'une partie supérieure de la pièce de coiffe P avec une partie inférieure de la même pièce de coiffe P. Plus spécifiquement, la partie inférieure de la même pièce de coiffe P est repliée, au niveau de la couture d'assemblage C, sous la partie supérieure de la pièce de coiffe P.

L'obtention de bandes 2, tissées et utilisables dans les modes de réalisation décrits ci-dessus, fait appel à des métiers à tisser usuels, notamment des métiers étroits, dans lesquels le nombre de fils est diminué au niveau du secteur 22 par rapport à au moins une autre région de la bande 2. Par exemple, le nombre de fils au niveau du secteur 22 est de 5 % à 30 % inférieur au nombre de fils dans le reste de la bande 2, notamment de 8 % à 30 % inférieur, de préférence entre 15 % et 25 % inférieur et préférentiellement de l'ordre de 17 % inférieur.

A titre d'exemple particulier de réalisation, la plage de densité des fils de la bande 2 est inférieure ou égale à 50 fils par centimètre en fil de chaine et inférieure ou égale à 30 fils par centimètre en fil de trame.

On notera que les pièces de coiffe P auxquelles sont assemblées la bande 2 tissée ne sont pas elles-mêmes, nécessairement, en tissu. On pourra ainsi coudre une bande 2 pour relier deux pièces en cuir, simili, ou autres matériaux. De même, si on le souhaite, on peut conférer à la bande 2 un aspect différent que celui d'un aspect tissé, en particulier par application d'une enduction, au niveau de la portion centrale 23 de la bande 2.

A titre d'exemple particulier de réalisation, la portion centrale 23 et/ou la portion latérale 25 de la bande 2 comportent un nombre de fils de chaîne supérieur à 30 fils par centimètre, de préférence supérieur à 50 fils par centimètre, avantageusement compris entre 40 fils par centimètre et 70 fils par centimètre.

De plus, également à titre d'exemple particulier de réalisation, la portion centrale 23 et/ou la portion latérale 25 de la bande 2 comportent un nombre de fils de trame supérieur à 20 fils par centimètre, de préférence supérieur à 35 fils par centimètre, avantageusement compris entre 20 et 50 fils par centimètre.

Divers modes de réalisation ont été décrits, diverses variantes et modifications apparaîtront à l'homme de l'art. En particulier, la largeur de la bande 2, comprise typiquement entre 3 cm et 20 cm, pourra être adaptée en fonction de l'effet désiré, notamment l'aspect esthétique et/ou fonctionnel souhaité. De plus, la mise en oeuvre pratique des modes de réalisation décrits est à la portée de l'homme du métier à partir des indications fonctionnelles données ci-dessus et en utilisant des techniques de tissage en elles-mêmes usuelles.

## Revendications

1. Coiffe (1) pour siège de véhicule automobile comportant au moins une pièce de coiffe (P) assemblée à au moins une bande (2) dont au moins une portion (23, 25) a un tissage ayant une première densité et au moins un secteur (22) a un tissage d'une seconde densité plus faible que la première densité, **caractérisée en ce qu'**une couture d'assemblage entre la bande (2) et la pièce de coiffe (P) est disposée au niveau du secteur (22) ayant la seconde densité.

2. Coiffe (1) selon la revendication 1, dans laquelle la bande (2) comporte deux secteurs (22) divisant la bande (2) en une portion centrale (23) et deux portions latérales (25).

3. Coiffe (1) selon les revendications 1 ou 2, dans laquelle le secteur (22) ayant la seconde densité présente un nombre de fils (f) par unité de surface inférieur au nombre de fils (f) par unité de surface de la portion (23, 25) ayant la première densité.

4. Coiffe (1) selon l'une quelconque des revendications précédentes, dans laquelle le secteur (22) ayant la seconde densité présente des fils (f) d'un diamètre inférieur au diamètre des fils (f) de la portion (23, 25) ayant la première densité.

5. Coiffe (1) selon l'une quelconque des revendications précédentes, dans laquelle une différence entre la première densité et la seconde densité représente un pourcentage compris entre 8 % et 30 %, de préférence compris entre 15 et 25 %, avantageusement de 17 %.

6. Coiffe (1) selon l'une quelconque des revendications précédentes, dans laquelle la portion (23, 25) ayant la première densité a un nombre de fils de chaîne supérieur à 30 fils par centimètre et, de préférence supérieur à 50 fils par centimètre.

7. Coiffe (1) selon l'une quelconque des revendications précédentes, dans laquelle la portion (23, 25) ayant la première densité a un nombre de fils de chaîne compris entre 40 fils par centimètre et 70 fils par centimètre.

8. Coiffe (1) selon l'une quelconque des revendications précédentes, dans laquelle le nombre de fils de chaîne dans le secteur (22) ayant la seconde densité est inférieur de 10 à 25 %, préférentiellement de 10 % à 20 %, au nombre de fils de chaîne dans la portion (23, 25) ayant la première densité.

9. Coiffe (1) selon l'une quelconque des revendications précédentes, dans laquelle la portion (23, 25) ayant la première densité a un nombre de fils de trame compris entre 20 fils par centimètre et 50 fils par centimètre.

10. Coiffe (1) selon l'une quelconque des revendications précédentes, comportant au moins une couture supplémentaire (C'), réalisée uniquement dans la pièce de coiffe (P).

11. Siège pour véhicule automobile comportant une coiffe (1) selon l'une quelconque des revendications 1 à 10.

## Patentansprüche

1. Überzug (1) für einen Fahrzeugsitz, der zumindest einen Überzugsteil (P) aufweist, der mit mindestens einem Streifen (2) zusammengefügt ist, der mindestens einen Teil (23, 25) mit einem Gewebe mit einer ersten Dichte hat, und mindestens einen Abschnitt (22) mit einem Gewebe mit einer zweiten Dichte, die niedriger ist als die erste Dichte, **dadurch gekennzeichnet, dass** eine Verbindungsnaht zwischen dem Streifen (2) und dem Überzugsteil (P) auf dem Niveau des Abschnittes (22) mit der zweiten Dichte angeordnet ist.

2. Überzug (1) nach Anspruch 1, wobei der Streifen (2) zwei Abschnitte (22) aufweist, welche den Streifen (2) in einen mittleren Teil (23) und zwei seitliche Teile (25) aufteilen.

3. Überzug (1) nach Anspruch 1 oder 2, wobei der Abschnitt (22) mit der zweiten Dichte eine Anzahl von Fäden (f) pro Oberflächeneinheit hat, die geringer ist als die Anzahl von Fäden (f) pro Oberflächeneinheit des Teils (23, 25) mit der ersten Dichte.

4. Überzug (1) nach einem der vorhergehenden Ansprüche, wobei der Abschnitt (22) mit der zweiten Dichte Fäden (f) mit einem kleineren Durchmesser hat als der Durchmesser der Fäden (f) des Teils (23, 25) mit der ersten Dichte.

5. Überzug (1) nach einem der vorhergehenden Ansprüche, wobei die Differenz zwischen der ersten Dichte und der zweiten Dichte einen Prozentsatz im Bereich von 8% bis 30%, vorzugsweise im Bereich von 15 bis 25%, vorteilhafterweise 17% darstellt.

6. Überzug (1) nach einem der vorhergehenden Ansprüche, wobei der Teil (23, 25) mit der ersten Dichte eine Anzahl von Kettfäden hat, die größer ist als 30 Fäden pro Zentimeter und vorzugsweise größer als 50 Fäden pro Zentimeter.

7. Überzug (1) nach einem der vorhergehenden Ansprüche, wobei der Teil (23, 25) mit der ersten Dichte eine Anzahl von Kettfäden im Bereich von 40 Fäden pro Zentimeter bis 70 Fäden pro Zentimeter hat.

8. Überzug (1) nach einem der vorhergehenden Ansprüche, wobei die Anzahl der Kettfäden im Abschnitt (22) von 10 bis 25%, vorzugsweise von 10 bis 20%, kleiner ist als die Anzahl von Kettfäden in dem Teil (23, 25) mit der ersten Dichte.

9. Überzug (1) nach einem der vorhergehenden Ansprüche, wobei der Teil (23, 25) mit der ersten Dichte eine Anzahl von Kettfäden im Bereich von 20 Fäden pro Zentimeter bis 50 Fäden pro Zentimeter hat.

10. Überzug (1) nach einem der vorhergehenden Ansprüche, der mindestens eine zusätzliche Verbindungsnaht (C') aufweist, die nur in dem Überzugsteil (P) ausgebildet ist.

11. Fahrzeugsitz, der den Überzug (1) nach einem der Ansprüche 1 bis 10 aufweist.

## Claims

1. A motor vehicle seat cover (1) comprising at least one cover part (P) assembled with at least one strip (2) having at least a portion (23, 25) with a weave having a first density and at least one sector (22) with a weave having a second density lower than the first density, **characterized in that** a seaming between the strip (2) and the cover part (P) is arranged at the level of the sector (22) having the second density.

2. The cover (1) of claim 1, wherein the strip (2) comprises two sectors (22) dividing the strip (2) into a central portion (23) and two lateral portions (25).

3. The cover (1) of claims 1 or 2, wherein the sector (22) having the second density has a number of yarns (f) per surface area unit smaller than the number of yarns (f) per surface area unit of the portion (23, 25) having the first density.

4. The cover (1) of any of the foregoing claims, wherein the sector (22) having the second density comprises yarns (f) having a diameter smaller than the diameter of the yarns (f) of the portion (23, 25) having the first density.

5. The cover (1) of any of the foregoing claims, wherein a difference between the first density and the second density represents a percentage in the range from 8% to 30%, preferably in the range from 15 to 25%, advantageously 17%.

6. The cover (1) of any of the foregoing claims, wherein the portion (23, 25) having the first density has a number of warp yarns greater than 30 yarns per centimeter and preferably greater than 50 yarns per centimeter.

7. The cover (1) of any of the foregoing claims, wherein the portion (23, 25) having the first density has a number of warp yarns in the range from 40 yarns per centimeter to 70 yarns per centimeter.

8. The cover (1) of any of the foregoing claims, wherein the number of warp yarns in the sector (22) is smaller by from 10 to 25%, preferably from 10% to 20%, than the number of warp yarns in the portion (23, 25) having the first density.

9. The cover (1) of any of the foregoing claims, wherein the portion (23, 25) having the first density has a number of warp yarns in the range from 20 yarns per centimeter to 50 yarns per centimeter.

10. The cover (1) of any of the foregoing claims, comprising at least one additional seam (C'), only formed in the cover part (P).

11. A motor vehicle seat comprising the cover (1) of any of claims 1 to 10.
